# EUROPEAN PATENT APPLICATION

(11) **EP 3 825 526 A1**
(43) Date of publication of application: **26.05.2021**
(21) Application number: 20208999.1
(22) Date of filing: 20.11.2020
(51) Int. Cl.: F01M 13/04, B01D 45/14

(54) **SEPARATOR FOR FILTERING A BLOW-BY MIXTURE FOR A VEHICULAR ENGINE**

(30) Priority: 22.11.2019 IT 201900021972
(71) Applicant: S.T.C. S.r.l., 10091 Alpignano (TO) (IT)
(72) Inventor: COLONNA, Giuseppe, 10091 ALPIGNANO (TO) (IT)
(74) Representative: Faraldi, Marco

(57) **Abstract**

A separator (1) for filtering a blow-by flow, comprising a casing (2) configured to define a housing (3), an inlet (6) and an outlet (7) both defined along a longitudinal axis (A) of said casing (2) and a separator assembly (4) comprising an element of composite material (16) and a pair of axial compression elements (17, 18) configured to axially and tightly maintain said composite material element (16) between them, the separator (1) comprising flow acceleration means (25) configured to accelerate in a direction parallel along said longitudinal axis (A) said blow-by flow directly against an exposed portion (16a) of said composite material (16) .

## Description

### CROSS-REFERENCE TO RELATED APPLICATIONS

This patent application claims priority from Italian patent application no. 102019000021972 filed on 22/11/2019.

### TECHNICAL FIELD

The present invention relates to a separator for a mixture of gas and oil of a vehicular engine, in particular a separator, advantageously also rotating, for the blow-by mixture arriving from the crankcase of an internal combustion engine of a vehicle.

### STATE OF THE PRIOR ART

In internal combustion engines, during the functioning steps, gas and oil vapour leakages occur, known as blow-by, in the cylinder head of the engine and in the crankcase. These gases must thus be discharged from the engine block so as to prevent the explosion of the cylinder head cover or of the casing of the oil pan and so as to prevent the damage of the sealing gaskets of the aforementioned elements.

The law imposes that these gases and oil vapours must not be released into the atmosphere for environmental reasons. Therefore, over time, various devices have been developed adapted to separate the air from the oil so as to be able to correctly discharge both.

Examples of such known devices are illustrated in the patent applications EP3311923 A1 or DE102008030028 A1.

However, the aforementioned devices have various shortcomings such as low efficiency, clogging phenomena (saturation at low engine rev) or are bulky.

In particular, a compact and substantially efficient device is illustrated in IT102018000007172. However, such device does not manage to provide a suitable suction of the blow-by inside it so as to proceed with the aforementioned oil-air filtration.

Therefore, the need is felt to improve the blow-by separators of the known type so as to make them more efficient, compact and cost-effective.

The object of the present invention is to meet the needs presented above.

### SUMMARY OF THE INVENTION

The aforementioned object is achieved by a separator as claimed in the appended claims.

### BRIEF DESCRIPTION OF THE DRAWINGS

To better understand the present invention, a preferred embodiment is described in the following, by way of nonlimiting example and with reference to the accompanying drawings, wherein:

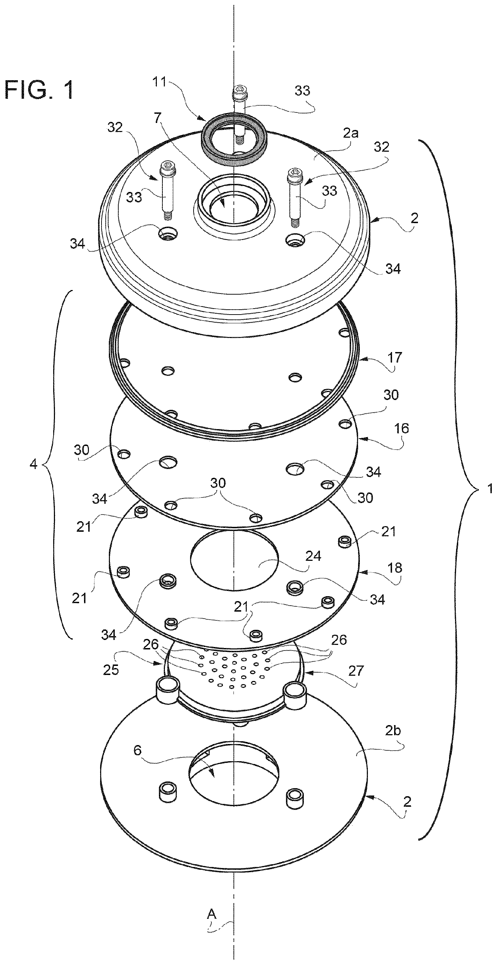

- Figure 1 illustrates a perspective schematic exploded view, with parts removed for clarity, of a separator according to the present invention;
- Figure 2 illustrates a cross-sectional schematic view, with parts removed for clarity, of the separator of Figure 1; and

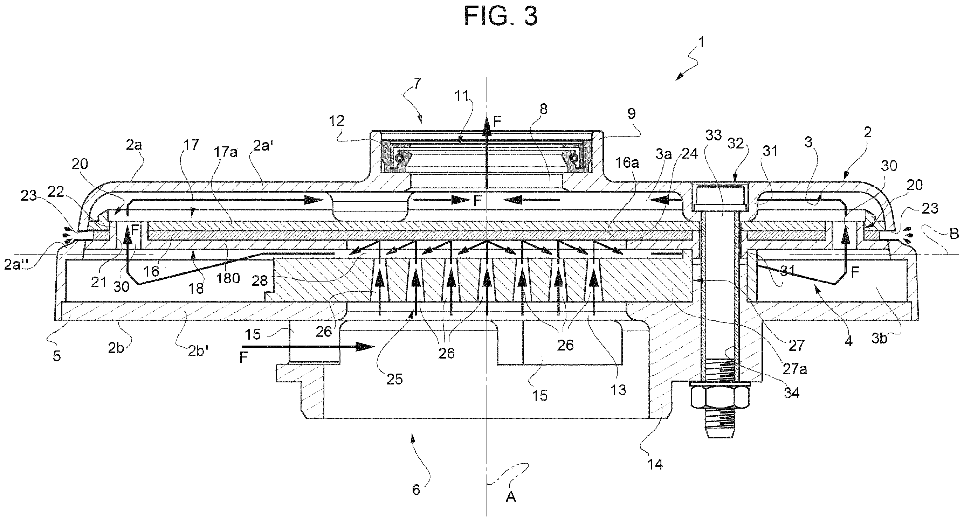

- Figure 3 illustrates the same view of Figure 2 with the indication of the flow-by path inside the separator according to the present invention.

### DETAILED DESCRIPTION OF THE INVENTION

In the accompanying figures, reference numeral 1 illustrates, as a whole, a separator for separating a blow-by flow into air and oil for an internal combustion engine.

The separator 1 comprises a casing 2 configured to define a housing 3 adapted to house inside it a separator assembly 4 for blow-by. The separator assembly 4 is integral with the rotation with respect to the casing 2 and further advantageously integral with the translation along a longitudinal axis A of the separator 1 and with a transversal axis B perpendicular to the axis A.

In particular, in the described embodiment, the casing 2 comprises an upper casing 2a and a lower casing 2b configured to cooperate in contact so as to define the housing 3 and placed at diametrically opposite sides with respect to the separator assembly 4 along the axis A. Preferably, both the upper casing 2a and the lower casing 2b have an axially symmetrical shape around the axis A and together define a substantially cylindrical housing volume.

According to the described embodiment, the upper casing 2a comprises an axial wall 2a' and a lateral wall 2a" extending perpendicularly to the lower casing 2b.

The latter essentially comprises an axial wall 2b', parallel to the axial wall 2a' and having an external diameter smaller than the lateral wall 2a" of the upper casing 2a" so as to cooperate in contact with it for delimiting the housing 3. Preferably, the lateral wall 2a" has an internal diameter greater than the external diameter of the axial wall 2b' and defines an annular seat 5 configured to house the end of the axial wall 2b'.

According to what presented above, the housing 3 is thus axially delimited by the axial walls 2a', 2b' of the casings 2a, 2b and laterally delimited by the lateral wall 2b" of the upper casing 2b.

The separator 1 can be adapted to any axial and circumferential bulk available as a function of the amount of blow-by flow to be filtered.

Both the upper casing 2a and the lower casing 2b further define an inlet 6 and an outlet 7 respectively for the blow-by flow passing through the separator assembly 4.

Advantageously, the outlet 7 is defined by the upper casing 2a and comprises an opening 8 made in the axial wall 2a' of the upper casing 2a and also an annular wall 9 extending perpendicularly around the rim of the opening 8 and configured to enable the blow-by flow to further proceed its path towards the suction of the engine, as is known. Preferably, the outlet 7 can be provided with sealing means 11, such as o-rings 12, housed internally with respect to the annular wall 9 and are configured to prevent the outflow of the air flow also during the rotation of the casing 2 with respect to the element to which the outlet 7 is connected.

Advantageously, the inlet 6 is defined by the lower casing 2b and comprises an opening 13 made in the axial wall 2b' of the upper casing 2b advantageously coaxial to the opening 8 of the outlet 7 and having a greater diameter than the latter. The inlet 6 further comprises an annular wall 14 extending perpendicularly around the rim of the opening 13. Advantageously, the annular wall 14 is configured to cooperate with a rotating element of the vehicle and/or of the internal combustion engine so as to enable the gas flow to pass inside the separator 1. Such rotating element can be a pulley, a cam or a transmission configured to cooperate with the annular wall 14 and enable the rotation thereof, if necessary.

Advantageously, the lateral wall 14 defines at least one opening 15 fluidically connected to a blow-by flow source. In the described embodiment, the lateral wall 14 defines three openings 15 circumferentially angularly equally spaced with respect to the axis A and preferably having a rectangular shape.

The separator assembly 4 essentially comprises a material of composite type 16, preferably of fleece type, i.e. a material configured to aggregate the oil particles, trap them and enable them to cause them to flow inside it locked between axial compression elements 17, 18.

In the described embodiment, the axial compression elements 17, 18 comprise an upper disc 17a and a lower disc 18a mechanically coupled to one another so as to maintain a composite disc 16 of the above-described material axially integral with them.

Preferably, the coupling between the upper disc 17a and the lower disc 18a is carried out by means of a mechanical coupling 20 between respective lug bolts 21 carried by one between the upper disc 17a and the lower disc 18a and seats 22 having a shape such to cooperate with the latter made in the other between the upper disc 17a and the lower disc 18a. In the described embodiment, such log bolts 21 are carried by the lower disc 18a and the seats 22 are carried by the upper disc 17a.

The upper disc 17a and the lower disc 18a extend transversally along the axis B such that their outer diameter is internally in contact with the lateral wall 2a" of the upper casing 2a so that there is no fluidic communication through the contact zone of the latter and the upper casing 2a.

The latter is advantageously provided with holes 23 placed circumferentially at the composite material 16, in a number such to optimise the characteristics of pressure, flow rate and speed of the engine on which the device is installed, and configured to enable the fluidic communication between the housing 3 and the outside.

As a consequence of what described above, the separator assembly 4 divides the housing into an upper space 3a fluidically communicating with the outlet 7 and a lower space 3b fluidically communicating with the inlet 6.

The lower disc 18a further defines an opening 24 configured to face the opening 13 defined by the lower casing 2b and preferably having dimensions equal to the latter. Such opening 24 enables a surface 16a of the disc of composite material 16 to directly face the inlet 7 and to be invested by the blow-by flow inflowed by the same.

The separator 1 further comprises flow acceleration means 25 configured to longitudinally, i.e. along the axis A, accelerate the blow-by flow inflowing from the opening 13 so as to enable a direct impact of the latter on the exposed surface 16a of the composite material 16.

In particular, such acceleration means 25 comprise a plurality of nozzles 26 configured to have an inlet having greater dimensions than the outlet so as to be able to accelerate, by Venturi effect, the fluid that flows through them.

In the described embodiment, such plurality of nozzles 26 is made on a supporting element 27 housed inside the housing 3, axially interposed between the separator assembly 4 and the lower casing 2b and fluidically interposed between the inlet 6 and the housing 3.

In particular, the supporting element 27 comprises a disc element 27a placed in contact with the opening 13 and defining the aforementioned nozzles 26 so that the inlet of the same corresponds to the opening 13 and so that the outlet of the same is placed facing the exposed portion 16a of the composite material 16.

The length, the diameter and the number of nozzles must be defined according to the specifications required by the relative installation.

In the described embodiment, the disc 27a has dimensions such to cooperate in contact with the internal surface of the lower casing 2b and leave an axial hole 28 between an internal surface thereof, corresponding to that where the outlets of the nozzles 26 and the lower disc 18b are obtained.

The separator assembly 4 further defines a plurality of openings 30 configured to enable the fluidic communication between the lower space 3b and the upper space 3a, i.e. from part to part of the separator assembly 4.

Advantageously, such openings 30 are made passing through the upper disc 17a, the lower disc 18a and, sealingly, the composite material 16 in a radially external position with respect to the exposed surface 16a of the composite material 16. Even more advantageously, such position is radially external with respect to the external radial dimension of the supporting element 27.

Advantageously, such openings 30 are made in the lug bolts 21 defining the mechanical coupling to the seats 22 so that there is no fluidic interference between the oil flowing in the composite material 16 and the flow passing through the separator assembly 4 from part to part.

In order to axially maintain in contact the separator assembly 4, the fluidic acceleration means 25 inside the casing 2, relative lug bolts 31 are further provided carried by the casing 2, by the elements composing the separator assembly 4 and by the supporting element 27 configured to define axial seats between the various elements so as to maintain them in contact between them.

Instead, in order to axially and tightly maintain the separator assembly 4, the fluidic acceleration means 25 inside the casing 2, also relative clamping means 32 are provided configured to generate a preload which axially and tightly maintains the aforementioned elements so that they are integral with the rotation.

Preferably, such clamping means 32 comprise threaded elements 33 passing through the casing 2, the elements composing the separator assembly 4, the supporting element 27 and configured to couple to the rotation and define an axial load between such elements.

According to the described embodiment, such threaded elements 33 are in number of three and housed inside respective through holes 34 made inside the casing 2 coaxially to the elements composing the separator assembly 4 and to the supporting element 27.

In particular, the threaded means comprise a screw and a nut, the screw can be inserted from the upper casing and tightened on the lower casing. In the described embodiment, the through holes 34 are placed in a radially intermediate position between the exposed surface 16a of the composite material 16 and the openings 30 for the passage of air through the separator assembly 4.

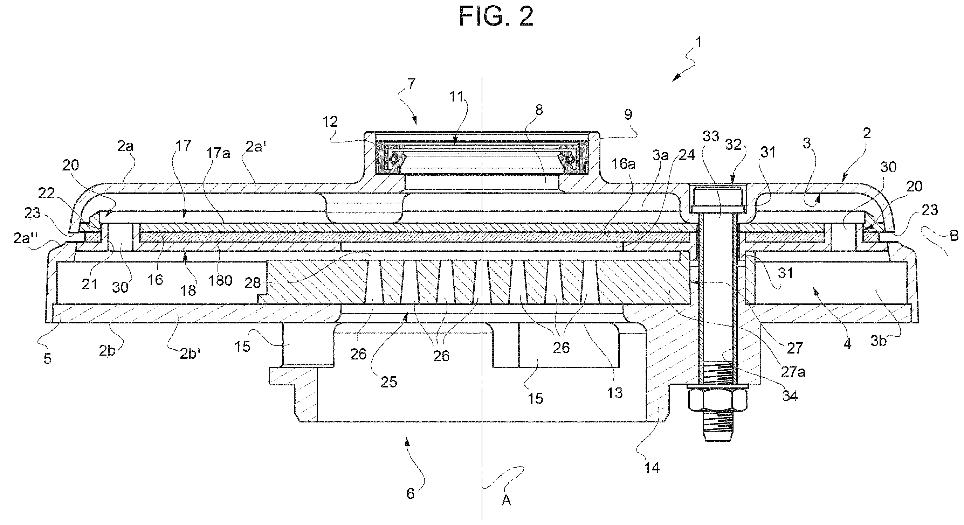

The functioning of the separator 1 above described is the following, referring to Figure 2.

The blow-by flow F enters through the openings 15 inside the inlet 6. Here, it passes through the plurality of nozzles 26, accelerating parallel to the longitudinal axis A and perpendicularly impacting against the exposed surface 16a of the composite material 16. Such high-speed impact enables the separation of the oil from the air; the oil, in particular, tends to be trapped inside the composite material 16 while the air tends to continue towards the outlet 7 keeping close to the lower disc 17a, passing through the openings 30 and finally keeping close to the upper disc 18.

In the case of small blow-by flows, the casing 2 can also not be driven into rotation by the aforementioned rotating element.

Instead, in the case of a considerable blow-by flow, the casing 2 is driven into rotation as described above. Such rotation of the separator 1 enables, thanks to the action of the centrifugal force, to cause the oil trapped in the exposed portion 16a of the disc of composite material 16 to move forward so that it can outflow from the holes 23, thus allowing the continuous outflow of the oil and the possibility of the exposed portion 16a to continuously filter the blow-by flow F. It is evident that the rotation of the separator 1 is substantially uninfluential on the air which follows its path through the openings 30 towards the outlet 7 due to its extremely lower density than that of the oil.

Based on the above, the advantages of a separator 1 according to the invention are evident.

The suction effect of the separator 1 is improved given the absence of the many pressure drops caused by the labyrinthine path and by the multiple flow decreases of the devices of the prior art.

Furthermore, the speed of the blow-by flow impacting on the free portion 16a of the disc of composite material 16 is increased and thus the filtering capacity of the filtering unit 4 is improved.

Furthermore, the system proposed is less bulky in axial sense along the axis A, thus compact and easier to mount and replace. The greatly simplified shape of the disc elements 4 further enables reducing the manufacturing costs.

Finally, it is evident that modifications and variants can be made to the separator 1 according to the present invention without however departing from the protection scope defined by the claims.

For example, it is evident that the shape of the casing 2 can be different, and the casings 2a, 2b can couple to one another along the transversal axis B and not the longitudinal one.

Furthermore, the clamping means 32 or the lug bolts 31 can be replaced by elements having the same function.

Furthermore, the shape of the axial compression elements 17, 18 can be varied, and the composite material 16 can be of any nature.

It is further evident that the geometry of the nozzles 26, of the openings 30, of the described mechanical couplings or their number can be varied as long as within the limits claimed below.

## Claims

1. A separator (1) for the separation of a blow-by flow, comprising a casing (2) configured to define a housing (3), an inlet (6) and an outlet (7) both defined along a longitudinal axis (A) of said casing (2),
said separator (1) comprising a separator assembly (4) housed inside said housing (3) and integral with respect to the latter and comprising an element of composite material (16) and a pair of axial compression elements (17, 18) configured to axially and tightly maintain said composite material element (16) between them,
one of said axial compression elements (18) is placed facing said inlet (6) and defining an opening (24) configured to free an exposed portion (16a) of said composite material (16) to the flow entering said housing (3) from said inlet (6),
said separator (1) comprising flow acceleration means (25) fluidically interposed between said inlet (6) and said separator assembly (4) and configured to accelerate, in a direction parallel along said longitudinal axis (A), said blow-by flow directly against said exposed portion (16a), said blow-by flow (F) impacting on said exposed portion (16a) enables the separation of oil with respect to the air in which it is contained,
said separator assembly (4) being configured to enable the passage of said filtered air towards said outlet (7), said composite material (16) being configured to cause the filtered oil to flow inside it.

2. The separator according to claim 1, wherein said casing (2) is configured to be connected to an element configured to enable the rotation thereof, said longitudinal axis (A) being a rotation axis of said separator (1), said oil filtered from said composite material (16) flowing thanks to the centrifugal force due to the rotation of said casing (2), the latter defining at least an opening (23) configured to cause the outflow of said oil flowing in said composite material (16).

3. The separator according to claim 1 or 2, wherein said flow acceleration means (25) comprise nozzles (26) defining a channel parallel to said longitudinal axis (A).

4. The separator according to claim 3, wherein said nozzles (26) comprise an inlet placed at an opening (13) of said inlet (6) and an outlet facing said exposed portion (16a) of said composite material (16), said inlet of said nozzles (26) having a diameter larger than said outlet.

5. The separator according to claim 4, wherein a hole (28) is present between said outlet of said nozzles (26) and said exposed portion (16a).

6. The separator according to one of the claims from 2 to 4, wherein said nozzles (26) are made in a supporting element (27) fluidically interposed between said inlet (6) and said separator assembly (4).

7. The separator according to claim 6, wherein said supporting element (27) is housed in said housing (3).

8. The separator according to one of the preceding claims, wherein said pair of axial compression elements (17, 18) cooperating in contact with said casing (2) to divide said housing (3) into one upper space (3a) fluidically communicating with said outlet (7) and a lower space (3b) fluidically communicating with said inlet, said upper space (3a) being arranged above said lower space (3b) along said axis (A),
said separator assembly (4) comprises openings (30) passing through said axial compression elements (17, 18) and sealingly passing through said composite material (16), configured to set said lower space (3b) in fluidic communication with said upper space (3a).

9. The separator according to claim 8, wherein said openings (30) are radially external with respect to said exposed portion (16a).

10. The separator according to one of the preceding claims, wherein one of said axial compression elements (17, 18) comprises at least a lug bolt (21) and the other of said axial compression elements (17, 18) comprises at least a seat (22) adapted to house said lug bolt (21) to tightly maintain said axial compression elements (17, 18) and said composite material (16).

11. The separator according to claim 10, when dependent on claim 8 or 9, wherein said openings are obtained in said at least one lug bolt (21).

12. The separator according to one of the preceding claims, comprising clamping means (32) configured to tightly maintain said casing (2), said separator assembly (4) and said flow acceleration means (25).

13. The separator according to one of the preceding claims, wherein said composite material (16) is of a fleece type.

14. The separator according to one of the preceding claims, wherein said casing (2), said separator assembly (4) and said flow acceleration means (25) have an axially symmetrical shape with respect to said longitudinal axis (A) .
